(19) Europäisches Patentamt
European Patent Office
Office européen des brevets

(11) **EP 2 996 254 A1**

(12) **EUROPEAN PATENT APPLICATION**

(43) Date of publication:
**16.03.2016 Bulletin 2016/11**

(51) Int Cl.:
**H04B 3/32** (2006.01)

(21) Application number: **14306406.1**

(22) Date of filing: **12.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Coomans, Werner**
**2018 Antwerp (BE)**

• **Nuzman, Carl**
**Murray Hill, NJ New Jersey 07974-0636 (US)**
• **Maes, Jochen**
**2018 Antwerpen (BE)**

(74) Representative: **ALU Antw Patent Attorneys Intellectual Property and Standards Copernicuslaan 50**
**2018 Antwerp (BE)**

(54) **Low complex joining for non-linear precoders**

(57)   The present invention relates to a network unit (100) comprising a non-linear precoder (120) and a vectoring controller (130).

In accordance with an embodiment of the invention, the non-linear precoder is configured to jointly pre-process transmit samples to be transmitted over respective subscriber lines for crosstalk mitigation. The operation of the non-linear precoder is based upon a first triangular precoding matrix (M; N) and a second precoding matrix (Q). The vectoring controller is configured to characterize first channel couplings between respective ones of a set of active lines ($L_1 .. L_N$) to derive first matrix values ($M_0$, $Q_0$; No, $Q_0$) for the first and second precoding matrices based upon the first channel couplings, to detect a joining event whereby a joining line ($L_{N+1}$) is to be brought into service, to characterize second channel couplings from the joining line into the respective active lines, and to derive second matrix values ($M_1$, $Q_1$; $N_1$, $Q_1$) for the first and second precoding matrices. The second matrix value of a selected one of the first or second precoding matrix is based upon the first and second channel couplings, while the second matrix value of the other precoding matrix is based upon the first channel couplings only. The second matrix values include the respective first matrix values as sub-matrices.

The present invention also relates to a method for controlling a non-linear precoder.

Fig. 2

**Description**

**Technical Field of the Invention**

The present invention relates to crosstalk mitigation within a wired communication system.

**Technical Background of the Invention**

Crosstalk (or inter-channel interference) is a major source of channel impairment for Multiple Input Multiple Output (MIMO) wired communication systems, such as Digital Subscriber Line (DSL) communication systems.

As the demand for higher data rates increases, DSL systems are evolving toward higher frequency bands, wherein crosstalk between neighboring transmission lines (that is to say transmission lines that are in close vicinity over part or whole of their length, such as twisted copper pairs in a cable binder) is more pronounced (the higher frequency, the more coupling).

Different strategies have been developed to mitigate crosstalk and to maximize effective throughput, reach and line stability. These techniques are gradually evolving from static or dynamic spectral management techniques to multi-user signal coordination (vectoring hereinafter).

One technique for reducing inter-channel interference is joint signal precoding: the transmit data symbols are jointly passed through a precoder before being transmitted over the respective communication channels. The precoder is such that the concatenation of the precoder and the communication channels results in little or no inter-channel interference at the receivers.

A further technique for reducing inter-channel interference is joint signal post-processing: the receive data symbols are jointly passed through a postcoder before being detected. The postcoder is such that the concatenation of the communication channels and the postcoder results in little or no inter-channel interference at the receivers. Postcoders are also sometimes referred to as crosstalk cancellation filters.

Signal vectoring is typically performed at a traffic aggregation point as vectoring primarily implies that data symbols concurrently transmitted over, or received from, the vectored lines are bunched all together and passed through the precoder or postcoder. For instance, signal vectoring is advantageously performed within a Digital Subscriber Line Access Multiplexer (DSLAM) deployed at a Central Office (CO), or as a fiber-fed remote unit closer to subscriber premises (street cabinet, pole cabinet, building cabinet, etc). Signal precoding is particularly appropriate for downstream communication (toward customer premises), while signal post-processing is particularly appropriate for upstream communication (from customer premises).

The choice of the vectoring group, that is to say the set of communication lines, the signals of which are jointly processed, is rather critical for achieving good crosstalk mitigation performances. within a vectoring group, each communication line is considered as a disturber line inducing crosstalk into the other communication lines of the group, and the same communication line is considered as a victim line incurring crosstalk from the other communication lines of the group. Crosstalk from lines that do not belong to the vectoring group is treated as alien noise and is not canceled.

Ideally, the vectoring group should match the whole set of communication lines that physically and noticeably interfere with each other. Yet, local loop unbundling on account of national regulation policies and/or limited vectoring capabilities may prevent such an exhaustive approach, in which case the vectoring group would include a sub-set only of all the interfering lines, thereby yielding limited vectoring gains.

More formally, a vectored system can be described by the following linear model:

$$\mathbf{Y}(k) = \mathbf{H}(k)\mathbf{X}(k) + \mathbf{Z}(k) \quad (1),$$

wherein the N-component complex vector $\mathbf{X}$, respectively $\mathbf{Y}$, denotes a discrete frequency representation, as a function of the frequency/carrier/tone index k, of the symbols transmitted over, respectively received from, the N vectored channels, wherein the NxN complex matrix $\mathbf{H}$ is referred to as the channel matrix: the (i,j)-th component $h_{ij}$ of the channel matrix $\mathbf{H}$ describes how the communication system produces a signal on the i-th channel output in response to a signal being transmitted to the j-th channel input; the diagonal elements of the channel matrix describe direct channel coupling, and the off-diagonal elements of the channel matrix (also referred to as the crosstalk coefficients) describe inter-channel coupling,

and wherein the N-component complex vector $\mathbf{Z}$ denotes additive noise over the N channels, such as Radio Frequency Interference (RFI) or thermal noise.

Linear signal precoding and post-processing are advantageously implemented by means of matrix products.

In downstream, the linear precoder performs a matrix-product in the frequency domain of a transmit vector $\mathbf{U}(k)$

with a precoding matrix $\mathbf{P}(k)$, i.e. $\mathbf{X}(k)=\mathbf{P}(k)\mathbf{U}(k)$ in eq. (1), the precoding matrix $\mathbf{P}(k)$ being such that the overall channel matrix $\mathbf{H}(k)\mathbf{P}(k)$ is diagonalized, meaning the off-diagonal coefficients of the overall channel $\mathbf{H}(k)\mathbf{P}(k)$, and thus the inter-channel interference, mostly reduce to zero.

Practically, and as a first order approximation, the precoder superimposes anti-phase crosstalk pre-compensation signals over the victim line along with the direct signal that destructively interfere at the receiver with the actual crosstalk signals from the respective disturber lines.

In upstream, the linear postcoder performs a matrix-product in the frequency domain of the receive vector $\mathbf{Y}(k)$ with a crosstalk cancellation matrix $\mathbf{Q}(k)$ to recover the transmit vector $\mathbf{U}(k)$ (after channel equalization and power normalization), the crosstalk cancellation matrix $\mathbf{Q}(k)$ being such that the overall channel matrix $\mathbf{Q}(k)\mathbf{H}(k)$ is diagonalized, meaning the off-diagonal coefficients of the overall channel $\mathbf{Q}(k)\mathbf{H}(k)$, and thus the inter-channel interference, mostly reduce to zero.

The performance of signal vectoring depends critically on the component values of the precoding or cancellation matrix, which component values are to be computed and updated according to the actual and varying channel couplings.

The various channel couplings are estimated by a vectoring controller based on pilot (or probing) signals transmitted over the respective channels. The pilot signals are typically transmitted over dedicated symbols and/or over dedicated tones.

For instance, in the recommendation entitled *"Self-FEXT cancellation (vectoring) For Use with VDSL2 Transceivers",* ref. G.993.5, and adopted by the International Telecommunication Union (ITU) on April 2010, the transceiver units send pilot signals on the so-called SYNC symbols. The SYNC symbols occur periodically after every 256 DATA symbols, and are transmitted synchronously over all the vectored lines (super frame alignment).

On a given disturber line, a subset of the carriers of a SYNC symbol (pilot tones hereinafter) are all 4-QAM modulated by the same pilot digit from a given pilot sequence, and transmit one of two complex constellation points, either '1 + j' corresponding to '+1', or '-1 - j' corresponding to '-1'. The remaining carriers of the SYNC symbol keep on carrying the SYNC-FLAG for acknowledgment of On-Line Reconfiguration (OLR) messages.

On a given victim line, both the real and imaginary part of the normalized slicer error, which is the difference vector between the received and properly equalized frequency sample and the constellation point onto which this frequency sample is demapped, are measured on a per pilot tone basis and reported for a specific SYNC symbol to the vectoring controller for further crosstalk estimation.

The successive error samples gathered over a given victim line are next correlated with the pilot sequence used over a given disturber line in order to obtain an estimate of the channel coupling from the given disturber line into the given victim line. To reject the crosstalk contributions from the other disturber lines, the pilot sequences used over the respective disturber lines are mutually orthogonal (e.g., walsh-Hadamard sequences).

The crosstalk estimates are eventually used for initializing the coefficients of the precoding or cancellation matrix, typically by means of a first or higher-order matrix inversion of the channel matrix for a Zero-Forcing (ZF) linear precoder. Once the precoding or cancellation matrix is initialized and in force, the process is repeated as needed to track the residual crosstalk and to obtain more and more accurate estimates. Those estimates are then used to update the coefficients of the precoding or cancellation matrix, typically by means of additive or multiplicative matrix updates.

A similar technique has been adopted in G.9701 ITU recommendation (also referred to as G.fast), which is still in the approval process and has not been released so far.

When a new subscriber line is brought into service, care shall be taken to not disturb the operation of the already active lines on account of the new crosstalk generated by the joining line and that is not yet canceled.

The initialization of the joining line goes through two initialization stages. During a first initialization stage (O/R-P-VECTOR1), transmission over the joining line is restricted to the SYNC symbol periods only. By so doing, one can characterize the crosstalk channels from the joining line into the active lines without impairing the communications over the active lines, which take place during the DATA symbol periods when the joining line is quiet. The precoding and cancellation matrices are then reconfigured to further cancel the crosstalk from the joining line into the active lines. From thereon, transmission over the joining line is allowed during the DATA symbol periods too.

During a second initialization stage (O/R-P-VECTOR2), error samples are gathered over the joining line to characterize the crosstalk channels from the active lines into the joining line. The precoding and crosstalk cancellation matrices are re-configured to further cancel the crosstalk present over the joining line. The joining line can now proceed with the initialization and characterization of the direct channel (aka channel training) and achieve the optimal vectored data rates at once.

With the advent of new copper access technologies and the use of even broader spectrum up to and beyond 100 MHz, the crosstalk coupling substantially increases. The power of the crosstalk signals may even surpass the power of the direct signals. Consequently, the superimposition of the crosstalk precompensation signals on a victim line may cause a violation of the transmit Power Spectral Density (PSD) mask, which defines the allowed amount of signal power for an individual user as a function of frequency, and may as well result in signal clipping within the Digital to Analog Converter (DAC) causing severe signal distortions.

A prior art solution is to scale down the gains of the direct signals, and thus of the corresponding precompensation signals, such that the transmit signals, including both the direct and precompensation signals, remain within the allowed bounds. The PSD reduction is line and frequency dependent, and may change over time, e.g. when a line joins or leaves the vectoring group. The change in direct signal gains must be communicated to the respective receivers for proper channel equalization. This first solution has been described in a standard contribution to the International Telecommunication Union (ITU) from Alcatel-Lucent entitled "G. fast: Precoder Gain scaling", reference ITU-T SG15 Q4a 2013-03-Q4-053, March 2013.

Another prior art solution is the use of Non-Linear Precoding (NLP), which applies modulo arithmetic operation to shift a transmit constellation point with excessive power back within the constellation boundary. At the receiver, the same modulo operation will shift the signal back to its original position.

The idea to employ modulo arithmetic to bound the value of the transmit signal was first introduced by Tomlinson and Harashima independently and nearly simultaneously with application to single-user equalization (M. Tomlinson, "New Automatic Equalizer Employing Modulo Arithmetic" Electronics Letters, 7(5-6), pp.138-139, Mar. 1971; and H. Harashima, and H. Miyakawa, "Matched-Transmission Technique for channels with Inter symbol Interference" IEEE Trans. on Communications, 20(4), pp. 774-780, Aug. 1972). Ginis and Cioffi applied the concept to multi-user system for crosstalk cancellation (G. Ginis and J.M. Cioffi, "A Multi-user Precoding Scheme Achieving Crosstalk Cancellation with Application to DSL systems", Proc. 34th Asilomar Conference on Signals, Systems and Computers, 2000).

Yet, modulo operation directly affects the transmit signal and thus the actual crosstalk induced onto the system, ending into a 'chicken-egg' problem: modulo operation for a first user alters precompensation for a second user; altered precompensation for the second user alters modulo operation for the second user; altered modulo operation for the second user user alters precompensation for the first user; and altered precompensation for the first user alters modulo operation for the first user; and so forth.

In order to overcome this issue, the non-linear precoder is constructed using the so-called **QR** matrix decomposition. A good overview of the technique, with step-by-step description of the functions is given by Ikanos (S. Singh, M. Sorbara, "G.fast: Comparison of Linear and Non-Linear Precoding for G.fast on 100m BT Cable", ITU-T SG15 Q4a contribution 2013-01-Q4-031, January 2013).

More formally, the channel matrix **H** is first written as:

$$\mathbf{H} = \mathbf{DG} \quad (2),$$

wherein the carrier index k has been voluntarily omitted, **D** is a diagonal matrix comprising the direct channel coefficients $h_{ii}$, and **G** is the normalized channel matrix with unit diagonal.

Ideal ZF linear precoding is achieved when the precoding matrix **P** implements the inverse of the normalized channel matrix, namely:

$$\mathbf{P} = \mathbf{G}^{-1} \quad (3),$$

such that **H.P** = **D**, the latter being compensated by single-tap Frequency EQualization (FEQ) at the receiver.

With linear ZF precoding, the noise at the receiver input is enhanced by the direct channel frequency response by a factor $1/h_{i,i}$. We also note that the noise is evenly enhanced for identical lines as they are all expected to have an almost equal path loss $h_{i,i}$.

with non-linear precoding, the conjugate transpose of the normalized channel matrix is first factored into two matrices, namely:

$$\mathbf{G}^* = \mathbf{QR} \quad (4),$$

wherein * denotes the conjugate transpose, **R** is an NxN upper triangular matrix, and **Q** is a NxN unitary matrix (i.e., $\mathbf{Q}^*\mathbf{Q} = \mathbf{I}$).

One diagonalizing precoding matrix is then given by:

$$\mathbf{P} = \mathbf{QR}^{*-1} \quad (5),$$

yielding $\mathbf{HP} = \mathbf{DGQR}^{*-1} = \mathbf{DR}^*\mathbf{Q}^*\mathbf{QR}^{*-1} = \mathbf{D}$.

Let us write:

$$\mathbf{L} = \mathbf{R}^{*-1}\mathbf{S} \quad (6),$$

wherein **L** is a NxN lower triangular matrix with unit diagonal, and **S** is a NxN normalization diagonal matrix whose elements are the diagonal elements of **R\***.

The diagonal matrix **S** indicates a per-line precoding gain that depends on the encoding order. **S** scaling is to be disposed of as it would adversely affect the power of the direct signals and the achievable bit rates, thereby yielding **P** = **QL** and **HP** = **DGQL** = **DR\*Q\*QR\*⁻¹S** = **DS**. A further equalization step **S⁻¹** is thus required at the receiver to recover the initial transmit sample. The gain scaling matrix **S** is determined by the vectoring controller, and sent to the receiver for proper signal equalization.

Ideal ZF non-linear precoding is thus achieved with a first feedforward filter **L**, or equivalently with a first feedback filter **M** = **I** - **L⁻¹** = **I** - **S⁻¹R\***, followed by a second feedforward filter **Q**. The feedback structure allows the feeding of the output samples after modulo operation back to the filter's input, while the triangular structure of the matrix **M** in the feedback loop is a solution to the aforementioned 'chicken-egg' problem: the modulo output for user i serves as input for users j encoded later (j>i), but does not affect the output of users k encoded earlier (k<i).

Hence, in a first step, each element i of the transmit vector **U** is added row by row to the i$^{th}$ output of the feedback filter **M**, which is a function of the previous i-1 outputs only, but before proceeding to the next row, the output for element i is adapted through a modulo operation, thereby keeping the transmit power within the allowed bounds. In a second step, the resulting vector is multiplied with the matrix **Q**, which preserves the initial transmit power on account of its unitary property.

More formally, the output of the non-linear precoder X' is given by:

$$
\begin{aligned}
x_1' &= \Gamma_{1,k}(u_1) = u_1 \\
x_2' &= \Gamma_{2,k}(u_2 + m_{21}x_1') = \Gamma_{2,k}\left(u_2 - \frac{r_{21}}{r_{22}}x_1'\right) \\
&\;\;\vdots \\
x_N' &= \Gamma_{N,k}(u_N + m_{NN-1}x_{N-1}' + \cdots + m_{N1}x_1') = \Gamma_{N,k}\left(u_N - \frac{r_{NN-1}}{r_{NN}}x_{N-1}' - \cdots - \frac{r_{N1}}{r_{NN}}x_1'\right)
\end{aligned}
\quad (7),
$$

wherein $u_i$, $x_i'$, $m_{ij}$ and $r_{ij}$ denote the coefficients of **U**, **X'**, **M** and **R\*** respectively, and wherein $\Gamma_{i,k}$ denotes the modulo operator as a function of the constellation size for carrier k and user i.

The modulo operator $\Gamma_{i,k}$ is given by:

$$\Gamma_{i,k}(x_{i,k}) = x_{i,k} - d \cdot M_{i,k} \cdot \left\lfloor \frac{x_{i,k} + d \cdot M_{i,k}/2}{d \cdot M_{i,k}} \right\rfloor \quad (8),$$

wherein $x_{i,k}$ denotes a transmit frequency sample for carrier k and user i, $M_{i,k}$ denotes the number of constellation points per I/Q dimension for carrier k and user i, and d denotes the distance between neighboring constellation points in the one dimension.

At the receiver, the equalized receive signal samples are given by:

$$y_i' = r_{ii}\Gamma_{i,k}\left(u_i - \sum_{j=1}^{i-1}\frac{r_{ij}}{r_{ii}}x_j'\right) + \sum_{j=1}^{i-1} r_{ij}x_j' + z_i \quad (9).$$

A further equalization step **S⁻¹** together with a further modulo operation is then needed to recover the initial transmit vector **U**:

$$\hat{y}_i = \Gamma_{i,k}\left(\frac{y_i{'}}{r_{ii}}\right) = \Gamma_{i,k}\left(\Gamma_{i,k}\left(u_i - \sum_{j=1}^{i-1}\frac{r_{ij}}{r_{ii}}x_j{'}\right) + \sum_{j=1}^{i-1}\frac{r_{ij}}{r_{ii}}x_j{'} + \frac{z_i}{r_{ii}}\right) = \Gamma_{i,k}\left(u_i + \frac{z_i}{r_{ii}}\right) \quad (10).$$

The term $u_i + \dfrac{z_i}{r_{ii}}$ is expected to be within the constellation boundaries and thus $\Gamma_{i,k}\left(u_i + \dfrac{z_i}{r_{ii}}\right)$ should be equal to $u_i + \dfrac{z_i}{r_{ii}}$ . The decision $\hat{u}_i$ is then made on that sample.

We note that the noise sample at the receiver input is enhanced by a factor of $1/r_{ii}$. We also note that for a cable with identical lines, the diagonal values of the **R\*** matrix do not have the same value; hence the noise enhancement is not the same on each line, which may lead to an unfair distribution of bit rates to the different users depending on the level of crosstalk couplings.

A major issue with non-linear precoding is the amount of processing resources required for updating the non-linear precoder. Indeed, whenever the crosstalk couplings substantially change, then a new **QR** matrix decomposition of the normalized channel matrix **G** is required to update both the precoding matrices **Q** and **L.** Such a **QR** matrix decomposition requires intensive computational resources as it is computationally equivalent to a full matrix inversion.

Furthermore, after each **QR** matrix decomposition, the **S** matrix will have changed. This requires the sending of new scaling coefficients to the remote receivers for proper equalization of the receive signals.

In the event of a new subscriber line being brought into service and added to the vectoring group, then at least two **QR** matrix decompositions are required: a first **QR** matrix decomposition after O-P-VECTOR1 initialization stage in order to allow the joining line to resume initialization and to transmit on DATA symbol positions too; and next another **QR** matrix decomposition after O-P-VECTOR2 in order to cancel the crosstalk over the joining line before the direct channel is characterized and respective carrier bit loadings are determined. Further **QR** matrix decompositions may be required, for instance whenever the crosstalk coefficients are re-characterized (e.g., after O-P-VECTOR1-1 learning phase following the re-configuration of the analog front-end during CHANNEL DISCOVERY/TRAINING phase).

An alternative implementation of a non-linear precoder has been described in the European patent application entitled "Non-Linear Precoder with Separate Modulo Decision" filed by Alcatel-Lucent on April 30, 2013 with application number 13305569.9. In this implementation, the modulo operation is done in a separate sequential loop, only calculating the shift-vector $\Delta$ caused by the modulo without partial precoding of the transmit signals. After adding the shift vector $\Delta$ to the transmit vector **U,** a full precoding step is performed at once with the precoding matrix **P = QL**. This implementation is particularly advantageous in that different update policies can be adopted for the modulo shift unit and the precoding stage. For instance, one can use a lower-precision arithmetic for the modulo shift unit since the multiplication of **L** is not in the data path but only serves in generating the shift vector $\Delta$, with the elements of $\Delta$ being on a coarse grid. Still for instance, one may leverage on the techniques developed for linear precoding for tracking the residual crosstalk and for updating the precoding matrix P without tracking **Q** and **L** independently.

## Summary of the Invention

It is an object of the present invention to improve the configuration of the non-linear precoder in the event of a new subscriber line being brought into service.

In accordance with a first aspect of the invention, a network unit comprises a non-linear precoder and a vectoring controller. The non-linear precoder is configured to jointly pre-process transmit samples to be transmitted over respective subscriber lines for crosstalk mitigation. The operation of the non-linear precoder is based upon a first triangular precoding matrix and a second precoding matrix. The vectoring controller is configured to characterize first channel couplings between respective ones of a set of active lines, to derive first matrix values for the first and second precoding matrices based upon the first channel couplings, to detect a joining event whereby a joining line is to be brought into service, to characterize second channel couplings from the joining line into the respective active lines, and to derive second matrix values for the first and second precoding matrices. The second matrix value of a selected one of the first or second precoding matrix is based upon the first and second channel couplings, while the second matrix value of the other precoding matrix is based upon the first channel couplings only. The second matrix values include the respective first matrix values as sub-matrices.

Such a network unit is typically an access node that supports wired communication to subscriber devices over an access plant, such as a DSLAM, an Ethernet switch, an edge router, etc, and deployed at a CO or as a fiber-fed remote unit closer to subscriber premises (street cabinet, pole cabinet, building cabinet, etc).

In accordance with another aspect of the invention, a method for controlling a non-linear precoder is proposed. The non-linear precoder is configured to jointly pre-process transmit samples to be transmitted over respective subscriber lines for crosstalk mitigation. The operation of the non-linear precoder is based upon a first triangular precoding matrix and a second precoding matrix. The method comprises characterizing first channel couplings between respective ones of a set of active lines, deriving first matrix values for the first and second precoding matrices based upon the first channel couplings, detecting a joining event whereby a joining line is to be brought into service, characterizing second channel couplings from the joining line into the respective active lines, and deriving second matrix values for the first and second precoding matrices. The second matrix value of a selected one of the first or second precoding matrix is based upon the first and second channel couplings, while the second matrix value of the other precoding matrix is based upon the first channel couplings only. The second matrix values include the respective first matrix values as sub-matrices.

In one embodiment of the invention, third channel couplings from the respective active lines into the joining line are characterized, and third matrix values for the first and second precoding matrices are derived based upon the first, second and third channel couplings, and by means of a QR matrix decomposition.

In one embodiment of the invention, the second channel couplings are characterized by means of a first sequence of pilot symbols transmitted over the joining line during a first identified stage of the line initialization, and by means of error measurements carried out over the respective active lines while the first sequence of pilot symbols is being transmitted.

In one embodiment of the invention, the third channel couplings are characterized by means of second sequences of pilot symbols transmitted over the respective active lines, and by means of error measurements carried out over the joining line during a second identified stage of the line initialization while the second sequences of pilot symbols are being transmitted.

In one embodiment of the invention, the non-linear precoder comprises a first partial precoding stage whose operation is based upon the first precoding matrix and including a modulo function, and a second partial precoding stage whose operation is based upon the second precoding matrix.

In one embodiment of the invention, the non-linear precoder comprises a modulo shift unit whose operation is based upon the first precoding matrix and including a modulo function, and a full precoding stage whose operation is based upon the first and second precoding matrices.

In one embodiment of the invention, the selected precoding matrix is the first precoding matrix and the other precoding matrix is the second precoding matrix.

In one embodiment of the invention, the second matrix values of the first and second precoding matrices are respectively given by $\mathbf{M}_1 = \begin{bmatrix} 0 & \mathbf{0} \\ -\mathbf{S}_0^{-1}\mathbf{b} & \mathbf{M}_0 \end{bmatrix}$ and $\mathbf{Q}_1 = \begin{bmatrix} 1 & \mathbf{0} \\ \mathbf{0} & \mathbf{Q}_0 \end{bmatrix}$ , $\mathbf{M}_0$ and $\mathbf{Q}_0$ denoting the first matrix values of the first and second precoding matrices respectively, $\mathbf{b}$ denoting the second channel couplings, and So denoting a first matrix value of a scaling diagonal matrix based upon the first channel couplings.

In one embodiment of the invention, the second matrix values of the first and second precoding matrices are respectively given by $\mathbf{N}_1 = \begin{bmatrix} 0 & \mathbf{0} \\ -\mathbf{Q}_0^{*}\mathbf{G}_0^{-1}\mathbf{b} & \mathbf{N}_0 \end{bmatrix}$ and $\mathbf{Q}_1 = \begin{bmatrix} 1 & \mathbf{0} \\ \mathbf{0} & \mathbf{Q}_0 \end{bmatrix}$ , $\mathbf{N}_0$ and $\mathbf{Q}_0$ denoting the initial matrix value of the first and second precoding matrix respectively, and **Go** and **b** denoting the first and second channel couplings respectively.

In one embodiment of the invention, the selected precoding matrix is the second precoding matrix and the other precoding matrix is the first precoding matrix.

In one embodiment of the invention, the second matrix values of the first and second precoding matrices are respectively given by $\mathbf{M}_1 = \begin{bmatrix} 0 & \mathbf{0} \\ \mathbf{0} & \mathbf{M}_0 \end{bmatrix}$ and $\mathbf{Q}_1 = \begin{bmatrix} 1 & \mathbf{0} \\ -\mathbf{G}_0^{-1}\mathbf{b} & \mathbf{Q}_0 \end{bmatrix}$ , $\mathbf{M}_0$ and $\mathbf{Q}_0$ denoting the initial matrix value of the first and second precoding matrix respectively, and $\mathbf{G}_0$ and **b** denoting the first and second channel couplings respectively.

Embodiments of a method according to the invention corresponds with the embodiments of the network unit.

The present invention proposes a simpler way to update the non-linear precoder when a new line is brought into service and added to the vectoring group.

After O-P-VECTOR1 initialization stage, the channel matrix is enlarged with one additional row and one additional column to accommodate the new joining line into the vectoring group, and is updated with the new crosstalk coefficients from the joining line into the already active lines as learned during O-P-VECTOR1. In the new channel matrix, the crosstalk coefficients from the active lines into the joining line have not been learned so far and thus are set to zero.

Yet, instead of proceeding with the full **QR** matrix decomposition of the new channel matrix, which may severely delay the resumption of the initialization procedure over the joining line, only one of the two precoding matrices is updated, while the other precoding matrix is essentially kept unchanged. The updated matrix can either be the triangular matrix or the unitary matrix.

The new value of the updated precoding matrix is computed from the crosstalk coefficients from the joining line into the active lines as learned during O-P-VECTOR1, and includes the former value of the precoding matrix as a sub-block. The other precoding matrix is essentially kept unchanged, meaning it is basically extended to accommodate the new joining line without any further re-computation.

The proposed algorithm is based on sub-block matrix decomposition, and achieves ZF precoding while substantially lowering the computational requirements and thus the initialization time over the joining line.

## Brief Description of the Drawings

The above and other objects and features of the invention will become more apparent and the invention itself will be best understood by referring to the following description of an embodiment taken in conjunction with the accompanying drawings wherein:

- fig. 1 represents an overview of an access plant;
- fig. 2 represents two reference models for a non-linear precoder;
- fig. 3 represents further details of an access node as per the present invention; and
- fig. 4 represents vectored lines in operation.

## Detailed Description of the Invention

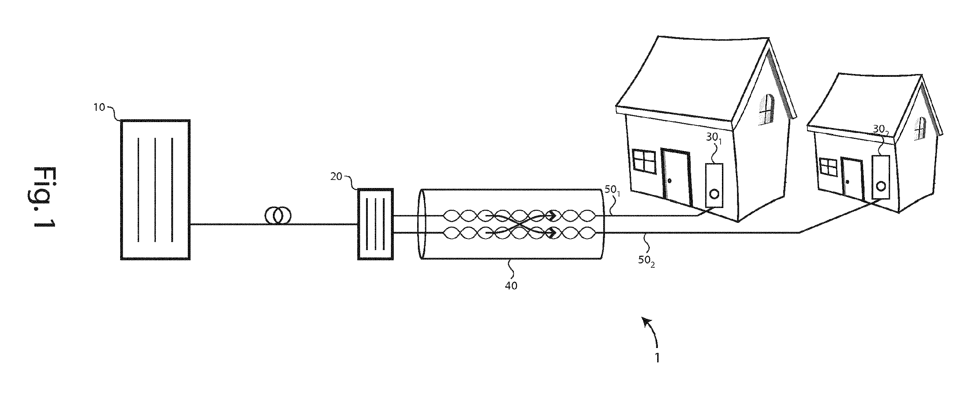

There is seen in fig. 1 an access plant 1 comprising a network unit 10 at a CO, an access node 20 coupled via one or more optical fibers to the network unit 10, and further coupled via a copper loop plant to Customer Premises Equipment (CPE) 30 at various subscriber premises.

The copper loop plant comprises a common access segment 40, wherein the subscriber lines are in close vicinity with each other and thus induce crosstalk into each other, and dedicated loop segments 50 for final connection to the subscriber premises. The transmission media is typically composed of copper unshielded Twisted Pairs (UTP).

The access node 20 comprises a Vectoring Processing Unit (VPU; not shown) for jointly processing the data symbols that are being transmitted over, or received from, the loop plant in order to mitigate the crosstalk induced within the common access segment 40 and to increase the communication data rates achievable over the respective subscriber lines.

The description will now focus on downstream communications, and further on the precoding of the downstream signals.

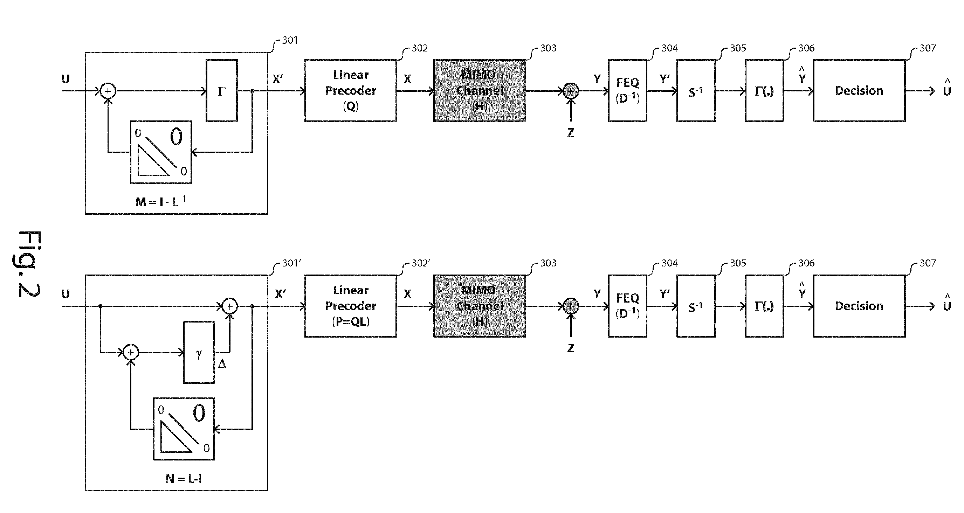

There is seen in fig. 2 two reference models for a non-linear precoder. The top reference model depicts a non-linear precoder as per the State of the Art (SoA hereinafter), and the bottom reference model depicts a non-linear precoder as per the aforementioned Alcatel-Lucent application (ALU hereinafter), the content of which is entirely incorporated herein.

The mathematical notations that were introduced for the discussion of the prior art are still adhered to.

In the SoA implementation, a transmit vector **U,** which comprises the respective transmit frequency samples to be transmitted over the respective communication channels, is input to a non-linear precoder comprising a first non-linear precoding stage 301 and a second linear precoding stage 302.

The first non-linear precoding stage 301 uses the modulo function r, and a first lower-triangular precoding matrix **M** in the feedback loop. The matrix **M** is given by $M = I - L^{-1} = I - S^{-1}R^*$, and has zero coefficients along its diagonal. The precoding stage 301 implements partial precoding as per equations (7) and (8), and outputs a partially-precoded vector **X'** to the second linear precoding stage 302.

The second linear precoding stage 302 uses a second unitary or almost-unitary matrix **Q,** and outputs a fully-precoded vector **X** for further transmission over the MIMO channel 303, which is represented by a channel matrix $H = DG = DR^*Q^*$.

The noisy received vector **Y,** which comprises the frequency samples received through the respective communication channels, and corrupted by some additive white Gaussian noise source **Z,** goes through the equalization stages 304 and 305. The first equalization stage 304, which corresponds to the typical frequency equalization step, uses a diagonal matrix $D^{-1}$, and outputs a partially-equalized received vector **Y'**. The second equalization stage 305 uses another diagonal matrix $S^{-1}$, whose element are the diagonal elements of $R^*$. The first and second equalization stages 304 and 305 can be merged into one single equal i zati on stage $D^{-1}S^{-1}$ or $S^{-1}D^{-1}$. The properly equalized frequency samples go then through the modulo function r 306 to yield a vector $\hat{Y}$ for detection by a decision stage 307 (or demodulator) to yield an estimate $\hat{\mathbf{U}}$ of the transmit vector $\mathbf{U}$.

In the ALU implementation, two new precoding blocks 301' and 302' substitute for the former precoding blocks 301 and 302 respectively.

The precoding stage 301' is a modulo shift unit that adds a shift vector $\Delta$ to the transmit vector $\mathbf{U}$ without any further signal precoding. The shift vector $\Delta$ is designed to keep the fully-precoded signal within the allowed power bound. The first precoding stage 301' outputs the vector $\mathbf{X'} = \mathbf{U} + \Delta$ to the second precoding stage 302'.

The precoding stage 301' includes a modified modulo function $\gamma$, and a matrix $\mathbf{N = L - I}$ in the feedback loop. The modulo function is given by:

$$\gamma_{i,k}(x_{i,k})=-d\cdot M_{i,k}\cdot\left\lfloor\frac{x_{i,k}+d\cdot M_{i,k}/2}{d\cdot M_{i,k}}\right\rfloor=\Gamma_{i,k}(x_{i,k})-x_{i,k} \quad (11),$$

and the shift vector $\Delta$ is given by:

$$\delta_i=\gamma_{i,k}\left(u_i+\sum_{j=1}^{i-1}l_{ij}\cdot(u_j+\delta_j)\right) \quad (12),$$

wherein $u_i$, $\delta_i$ and $l_{ij}$ denote the coefficients of U, $\Delta$ and $\mathbf{L = R^{*-1}S}$ respectively.

The second precoding stage 302' makes use of the full precoding matrix $\mathbf{P = QL,}$ and outputs a fully precoded signal $\mathbf{X = PX'}$ for further transmission over the MIMO channel 303.

consider now a use case with a group of N vectored lines $L_1$ to $L_N$ that are actively engaged in communication (aka show time). Consider a new line $L_{N+1}$ joining the vectoring group, increasing the number of vectored lines to N+1.

The joining is divided in 3 main phases: O-P-VECTOR1, O-P-VECTOR2, and CHANNEL ANALYSIS (further initialization stages are voluntarily omitted here). During O-P-VECTOR1, SYNC symbols only are transmitted over the joining line $L_{N+1}$, and the crosstalk couplings from the joining line $L_{N+1}$ into the respective active lines $L_1$ to $L_N$ are estimated. The precoding matrices are updated a first time to further cancel the crosstalk from the joining line $L_{N+1}$ into the active lines $L_1$ to $L_N$ before transitioning to O-P-VECTOR2. In O-P-VECTOR2, SYNC and DATA symbols are both transmitted over the joining line $L_{N+1}$, and the crosstalk couplings from the respective active lines $L_1$ to $L_N$ into the joining line $L_{N+1}$ are estimated. The precoding matrices are updated a second time to further cancel the crosstalk present over the joining line $L_{N+1}$ before transitioning to CHANNEL ANALYSIS. During CHANNEL ANALYSIS, the direct channel over the joining line $L_{N+1}$ is characterized in order to determine the respective carrier bit loadings and further communication parameters to be used during SHOWTIME.

Let us denote $\mathbf{G}_0$ the NxN normalized channel matrix before the line $L_{N+1}$ joins the vectoring group, and $\mathbf{G}_1$ the new (N+1)x(N+1) normalized channel matrix after O-P-VECTOR1. Assuming the joining line $L_{N+1}$ is added to the first position, the new matrix $\mathbf{G}$ can be written as:

$$\mathbf{G}_1=\begin{bmatrix}1 & \mathbf{0}\\ \mathbf{b} & \mathbf{G}_0\end{bmatrix} \quad (13),$$

wherein $\mathbf{b}$ denotes a column vector comprising the N normalized crosstalk coefficients from the joining line $L_{N+1}$ into the respective active lines $L_1$ to $L_N$ as learned during O-P-VECTOR1. The zero top row means that any crosstalk from the active lines $L_1$ to $L_N$ into the joining line $L_{N+1}$ is ignored at that stage of the initialization process.

As one can see, the normalized channel matrix $\mathbf{G}_1$ has a form which is easily invertible in a low-complex way. This avoids performing a full $\mathbf{QR}$ matrix decomposition in O-P-VECTOR1 and the accompanying direct gain scaling.

The inverse of the matrix $\mathbf{G}_1$ is given by:

$$\mathbf{G}_1^{-1}=\begin{bmatrix}1 & \mathbf{0}\\ -\mathbf{G}_0^{-1}\mathbf{b} & \mathbf{G}_0^{-1}\end{bmatrix} \quad (14).$$

Non-linear precoding typically requires a $\mathbf{QR}$ matrix decomposition of the normalized channel matrix $\mathbf{G_1}$, which

is computationally intensive. For future reference, note that a **QR** matrix decomposition has the same computational complexity as a matrix inversion, namely in the order of $O(N^3)$ Multiply and Accumulate (MAC) operations for a NxN matrix. Furthermore, after performing the **QR** matrix decomposition, the scaling matrix **S** will have changed. This requires the sending of new direct gains to the receivers.

The present invention proposes to update the precoding matrices in two different lower-complex ways.

The first method is to update the triangular precoding matrix **L,** from which the matrix **M** or **N** is derived, while leaving the unitary matrix **Q** essentially unchanged.

Since the matrix **L** is calculated from the matrix **R,** we first look at the required change in **R.** Assuming ZF precoding, the desired outcome of O-P-VECTOR1 is that, for the new **Q** and **R,** we have:

$$\mathbf{Q}_1(\mathbf{R}_1{}^*)^{-1} = \mathbf{G}_1^{-1} \quad (15).$$

Let us write the new matrix $\mathbf{Q}_1$ as the basic $N \to N+1$ extension of the initial matrix $\mathbf{Q}_0$:

$$\mathbf{Q}_1 = \begin{bmatrix} 1 & 0 \\ 0 & \mathbf{Q}_0 \end{bmatrix} \quad (16).$$

This new matrix **Q** remains unitary. Equation (15) is fulfilled if:

$$\mathbf{R}_1{}^* = \begin{bmatrix} 1 & 0 \\ \mathbf{b} & \mathbf{R}_0{}^* \end{bmatrix} \quad (17),$$

since: $\mathbf{Q}_1(\mathbf{R}_1{}^*)^{-1} = \begin{bmatrix} 1 & 0 \\ 0 & \mathbf{Q}_0 \end{bmatrix}\begin{bmatrix} 1 & 0 \\ -(\mathbf{R}_0{}^*)^{-1}\mathbf{b} & (\mathbf{R}_0{}^*)^{-1} \end{bmatrix} = \begin{bmatrix} 1 & 0 \\ -(\mathbf{G}_0)^{-1}\mathbf{b} & (\mathbf{G}_0)^{-1} \end{bmatrix}$, and assumi ng that $\mathbf{Q}_0(\mathbf{R}_0{}^*)^{-1} = \mathbf{G}_0^{-1}$ initially.

For the SoA non-linear precoder, this ZF solution translates into a new matrix **M** given by:

$$\mathbf{M}_1 = \mathbf{I} - \mathbf{L}_1^{-1} = \mathbf{I} - \mathbf{S}_1^{-1}\mathbf{R}_1{}^* = \begin{bmatrix} 0 & 0 \\ -\mathbf{S}_0^{-1}\mathbf{b} & \mathbf{M}_0 \end{bmatrix} \quad (18),$$

wherein the new scaling matrix $\mathbf{S}_1$ is defined from the diagonal elements of $\mathbf{R}_1{}^*$ and hence is given by $\mathbf{S}_1 = \begin{bmatrix} 1 & 0 \\ 0 & \mathbf{S}_0 \end{bmatrix}$, implying that the scaling coefficients remain unchanged.

Considering that both **Mo** and $\mathbf{S}_0^{-1}$ are already known prior to the joining event, the calculation of the new matrix **M** as per equation (18) requires N MAC operations for the matrix product $-\mathbf{S}_0^{-1}\mathbf{b}$.

For the ALU non-linear precoder, this ZF solution translates into a new matrix **N** for use by the modulo shift unit given by:

$$\mathbf{N}_1 = \mathbf{L}_1 - \mathbf{I} = (\mathbf{R}_1{}^*)^{-1}\mathbf{S}_1 - \mathbf{I} = \begin{bmatrix} 0 & 0 \\ -(\mathbf{R}_0{}^*)^{-1}\mathbf{b} & \mathbf{N}_0 \end{bmatrix}, \text{ or}$$

$$\mathbf{N}_1 = \begin{bmatrix} 0 & 0 \\ -\mathbf{Q}_0{}^*(\mathbf{G}_0)^{-1}\mathbf{b} & \mathbf{N}_0 \end{bmatrix} = \begin{bmatrix} 0 & 0 \\ -\mathbf{L}_0(\mathbf{S}_0)^{-1}\mathbf{b} & \mathbf{N}_0 \end{bmatrix} \quad (19),$$

as well as into a new precoding matrix **P** given by:

$$P_1 = Q_1 L_1 = Q_1 (R_1 *)^{-1} S_1 = \begin{bmatrix} 1 & 0 \\ -(G_0)^{-1}b & P_0 \end{bmatrix} \quad (20).$$

This precoding matrix achieves indeed ZF precoding over the active lines $L_1$ to $L_N$ since:

$$GP_1 = \begin{bmatrix} 1 & c \\ b & G_0 \end{bmatrix} \begin{bmatrix} 1 & 0 \\ -(G_0)^{-1}b & P_0 \end{bmatrix} = \begin{bmatrix} 1 - c(G_0)^{-1}b & cP_0 \\ 0 & S_0 \end{bmatrix},$$

wherein **c** denotes a row vector comprising the N normalized crosstalk coefficients from the respective active lines $L_1$ to $L_N$ into the joining line $L_{N+1}$.

Considering that both **Lo** = **No** + **I** and $S_0^{-1}$ are already known prior to the joining event, the calculation of the new matrix **N** as per equation (19) requires N MAC operations for the matrix product $S_0^{-1}b$, and N(N+1)/2 further MAC operations for the product with the triangular matrix **-Lo.**

Alternatively, the new precoding matrix **P** can be computed as per equation (20), and next the new matrix **N** can be obtained by multiplication of **P** with $Q_0*$, hence a total of $2N^2$ MAC operations.

In an alternative embodiment, the triangular matrix **L** is essentially left unchanged, and so are the matrices **M** and **N** derived therefrom, and the unitary matrix **Q** is updated.

More specifically, the new matrix **L** is given as the basic N → N+1 extension of the initial matrix **Lo:**

$$L_1 = \begin{bmatrix} 1 & 0 \\ 0 & L_0 \end{bmatrix} \quad (21),$$

thereby yielding $M_1 = \begin{bmatrix} 0 & 0 \\ 0 & M_0 \end{bmatrix}$ (SoA) and $N_1 = \begin{bmatrix} 0 & 0 \\ 0 & N_0 \end{bmatrix}$ (ALU).

The new matrix **Q** is given by:

$$Q_1 = \begin{bmatrix} 1 & 0 \\ -G_0^{-1}b & Q_0 \end{bmatrix} \quad (22).$$

Full crosstalk cancellation over the active lines $L_1$ to is still achieved as $P_1 = Q_1 L_1 = \begin{bmatrix} 1 & 0 \\ -(G_0)^{-1}b & P_0 \end{bmatrix}$.

The extra nonzero column in **Q** makes it non-unitary. This will add some power to the lines $L_1$ to $L_N$ resulting from the precompensation signals of the joining line $L_{N+1}$, which may cause a PSD violation. The increase in power for each active line $L_i$ is proportional to $|y_i|^2$, with $y = -(G_0)^{-1}b$. Note that only **Q** has changed, the gain scaling **S** has not changed. If one can tolerate this PSD violation on the active lines, no gain scaling is necessary. Alternatively, one could opt for an extra gain scaling to counteract the PSD violation.

The calculation of the new matrix **Q** as per equation (22) has a computational complexity of $N^2$ MAC operations provided $G_0^{-1}$ is known, which implies a complexity gain of N. If $G_0^{-1}$ is not known, then it is computed as $G_0^{-1} = P_0 S_0^{-1}$, and the calculation of the new matrix **Q** requires N MAC operations for the matrix product $S_0^{-1}b$, and $N^2$ further MAC operations for the matrix product with $-P_0$. Hence, this is slightly more complex than the case when $G_0^{-1}$ is known, but still less complex than a full **QR** decomposition.

Following this intermediary update of the precoding matrices **M** and **Q** (SoA), or **N** and **P** (ALU), the joining line $L_{N+1}$ is allowed to proceed to the next initialization step, namely O-P-VECTOR2.

In O-P-VECTOR2, the crosstalk from the active lines $L_1$ to $L_N$ into the joining line $L_{N+1}$ has now to be canceled in order to proceed with the analysis of the direct channel over the joining line $L_{N+1}$. The top row of **G** in equation (13) is filled with the new crosstalk coefficients from the active lines $L_1$ to $L_N$ into the joining line $L_{N+1}$ as learned during O-P-VECTOR2, thereby yielding the new normalized channel matrix:

$$G_2 = \begin{bmatrix} 1 & c \\ b & G_0 \end{bmatrix} \quad (23).$$

A full **QR** decomposition of the normalized channel matrix $G_2$ then yields the new vectoring matrices **Q, L** and **S**, from which a new matrix **M** or **N** is derived depending on the implementation choice. It is noteworthy that, following this full **QR** decomposition, the joining line $L_{N+1}$ does not need to remain at the first position in the precoding order as it was assumed so far.

The present invention thus proposes an acceleration of the joining phase with nonlinear precoding. State-of-the-art methods require two **QR** decompositions and two direct gain scaling adaptations. Instead, two lower-complex alternative methods are proposed. Both methods replace one of the two QR decompositions with a lower-complex calculation. In the first method, one of the two gain adaptations can be eliminated, and this is hence the preferred method. In the second method, one of the two gain adaptations can also be eliminated if a PSD violation on the already active lines can be tolerated.

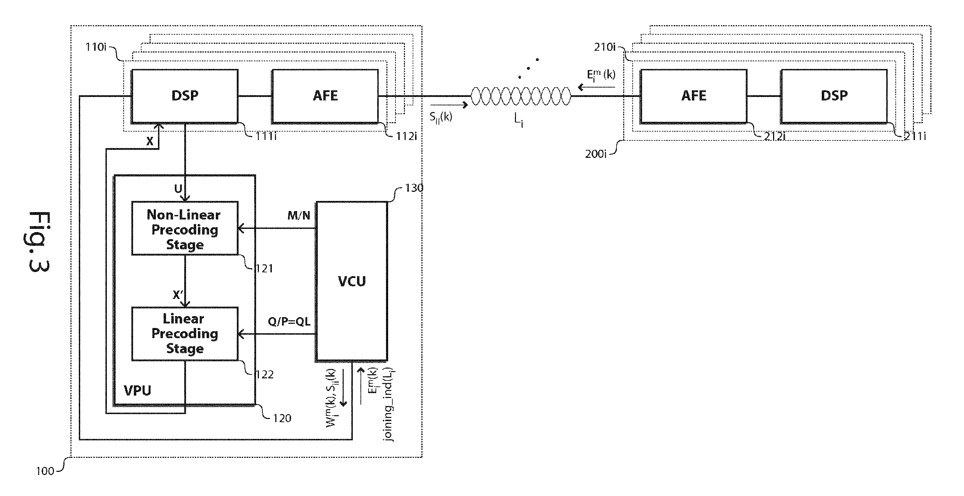

There is seen in fig. 3 further details about an access node 100 as per the present invention.

The access node 100 comprises:

- transceivers 110;
- a VPU 120; and
- a Vectoring Control Unit (VCU) 130 for controlling the operation of the VPU 120.

The transceivers 110 are individually coupled to the VPU 120 and to the VCU 130. The VCU 130 is further coupled to the VPU 120.

The transceivers 110 individually comprise:

- a Digital Signal Processor (DSP) 111; and
- an Analog Front End (AFE) 112.

The access node 100 is coupled to CPEs 200 through respective subscriber lines $L_i$, which are assumed to form part of the same vectoring group.

The CPE 200 comprises respective transceivers 210 individually comprising:

- a Digital Signal Processor (DSP) 211; and
- an Analog Front End (AFE) 212.

The AFEs 112 and 212 individually comprise a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the transmission line, and a Low Noise Amplifier (LNA) for amplifying the receive signal with as little noise as possible.

In case of Frequency Division Duplexing (FDD) operation where downstream and upstream communications operate simultaneously over the same transmission medium in distinct and non-overlapping frequency bands, the AFEs 112 and 212 further comprise a hybrid for coupling the transmitter output to the transmission medium and the transmission medium to the receiver input while achieving low transmitter-receiver coupling ratio. The AFE may further accommodate echo cancellation filters to reduce the coupling ratio at a further extent.

In case of Time Duplexing Division (TDD) operation where downstream and upstream communications operate over the same frequency band but in distinct and non-overlapping time slots, the hybrid can be advantageously omitted as the transmitter and receiver operate in alternate mode: the receive circuitry is switched OFF (or the receive signal is discarded) while the transmit circuitry is active, and the way around, the transmit circuitry is switched OFF while the receive circuitry is active.

The AFEs 112 and 212 further comprise impedance-matching circuitry for adapting to the characteristic impedance of the transmission medium, clipping circuitry for clipping any voltage or current surge occurring over the transmission medium, and isolation circuitry (typically a transformer) for DC-isolating the transceiver from the transmission medium.

The DSPS 111 and 211 are configured to operate downstream and upstream communication channels for conveying user traffic over a subscriber line in both directions.

The DSPS 111 and 211 are further configured to operate downstream and upstream control channels that are used to transport control traffic, such as diagnosis or management commands and responses. Control traffic is multiplexed with user traffic over the subscriber line.

More specifically, the DSPS 111 and 211 are for encoding and modulating user and control data into digital data symbols, and for de-modulating and decoding user and control data from digital data symbols.

The following transmit steps are typically performed within the DSPS 111 and 211:

- data encoding, such as data multiplexing, framing, scrambling, error correction encoding and interleaving;
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis coding;
- signal scaling;
- Inverse Fast Fourier Transform (IFFT);
- Cyclic Prefix (CP) insertion; and possibly
- time-windowing.

The following receive steps are typically performed within the DSPS 111 and 211:

- CP removal, and possibly time-windowing;
- Fast Fourier Transform (FFT);
- Frequency EQualization (FEQ);
- signal de-modulation and detection, comprising the steps of applying to each and every equalized frequency sample an appropriate constellation grid, the pattern of which depends on the respective carrier bit loading, detecting the expected transmit constellation point and the corresponding transmit bit sequence, possibly with Trellis decoding, and re-ordering all the detected chunks of bits according to the carrier ordering table; and
- data decoding, such as data de-interleaving, error correction, de-scrambling, frame delineation and de-multiplexing.

Some of these transmit or receive steps can be omitted, or some additional steps can be present, depending on the exact digital communication technology being used.

The transceivers 110 are further configured to notify the VCU 130 whenever a new subscriber is to be brought into service (see joining_ind($L_i$) in fig. 3). Typically, the VCU 130 is notified upon completion of the HANDSHAKE phase with a remote transceiver 210i.

The VPU 120 is for jointly processing the components of the transmit vector **U** in order to pre-compensate an estimate of the coming crosstalk. The VPU 120 comprises a first non-linear precoding stage 121 serially coupled to a second linear precoding stage 122.

The first precoding stage 121 includes a modulo function, presently $\Gamma$ (SoA) or $\gamma$ (ALU), and is configured to process the transmit vector **U** according to a first triangular precoding matrix, presently the lower-triangular matrix **M** (SoA) or **N** (ALU).

The second precoding stage 122 is configured to process the vector **X'** output by the first precoding stage 121 by multiplication with a second precoding matrix, presently the matrix **Q** (SoA) or **P** (ALU), and yields the fully-precoded transmit vector **X**.

The fully-precoded transmit vector **X** is returned to the DSPS 111 for IFFT and further transmission over the respective subscriber lines.

The VCU 130 is basically for initializing and updating the precoding matrices **M** and **Q** (SoA), or **N** and **P** (ALU), that are used by the first precoding stage 121 and the second precoding stage 122 respectively.

The VCU 130 first characterizes the crosstalk couplings between the respective lines of the vectoring group by means of pilot signals sent during dedicated symbol positions.

The pilot digit transmitted over a particular transmission line Li at frequency index k during a given symbol period m is denoted as $w_i^m(k)$. The pilot sequences are mutually orthogonal, and comprises M pilot digits $\{w_i^m(k)\}_{1..M}$ to be transmitted over M symbol periods (with M typically larger than the size of the vectoring group).

Next, the VCU 130 gathers respective slicer errors as measured during the detection of the pilot signals by the remote transceivers 210 (downstream) and 110 (upstream). The slicer error as measured by the transceiver 110i or 210i over a victim line Li at frequency index k during symbol period m is denoted as $E_i^m(k)$. The transceivers 110 and 210 report both the real and imaginary part of the measured slicer errors to the VCU 130.

Finally, the VCU 130 correlates a sequence of M successive error measurements $\{E_i^m(k)\}_{1..M}$ as measured over the victim line Li with the M respective pilot digits $\{w_j^m(k)\}_{1..M}$ of the pilot signal transmitted over a disturber line Lj so as to obtain an estimate of the crosstalk coefficient from the disturber line Lj into the victim line Li at frequency index k. As the pilot sequences are mutually orthogonal, the contributions from the other disturber lines reduce to zero after this correlation step.

The VCU 130 initializes or updates the precoding matrices **M** and **Q** (SoA), or **N** and **P** (ALU), from the so-estimated crosstalk coefficients.

If the scaling matrix **S** is also updated, then new direct gains values are communicated to the remote transceivers 210 (see Sii(k) in fig. 3).

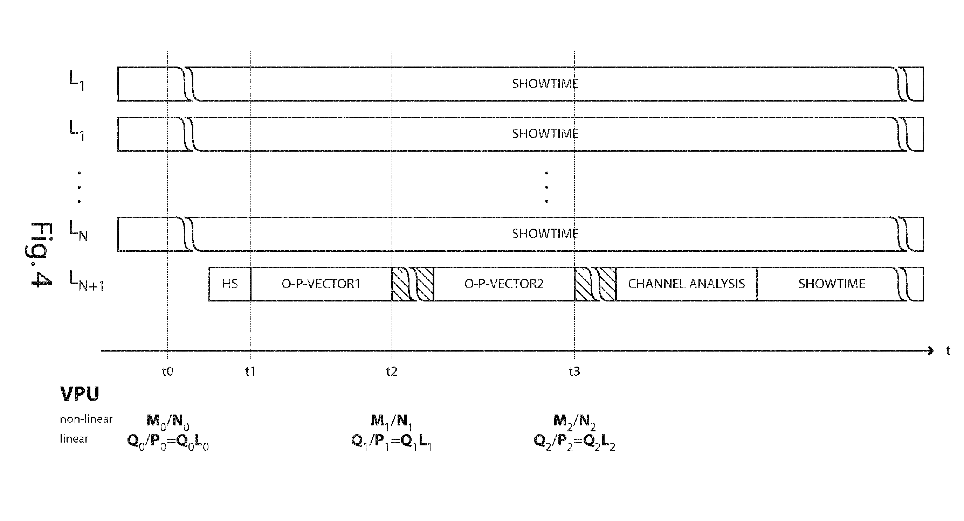

An operation of the access node 100 is now described with reference to fig. 4.

Again, let $L_1$ to $L_N$ be the lines already in showtime, and let $L_{N+1}$ be the joining line.

At time t0, prior to the joining of line $L_{N+1}$, the first non-linear precoding stage 121 and the second linear precoding stages 122 are initially configured with first matrix values $\mathbf{M_0/N_0}$ and $\mathbf{Q_0/P_0}$ respectively. These initial values are typically obtained by **QR** decomposition of an estimate of the normalized channel matrix **G.** The remote transceivers $210_1$ to $210_N$ are configured with first direct gain values **So.**

At time $t_1$, the VCU 130 is notified by the transceiver $110_{N+1}$ of the successful completion of the handshake phase over the joining line $L_{N+1}$ (see HS phase over the joining line $L_{N+1}$ in fig. 4). The line $L_{N+1}$ is to be included into the vectoring groups, which comprises the lines $L_1$ to $L_N$ so far.

Thereupon, the VCU 130 configures the pilot sequence $\{w_{N+1}^m(k)\}_{1..M}$ to be used over the joining line $L_{N+1}$ during O/R-P-VECTOR1, which follows the HANDSHAKE phase. The new pilot sequence $\{w_{N+1}^m(k)\}_{1..M}$ is communicated to the transceiver $110_{N+1}$ (downstream), and to the transceiver $210_{N+1}$ (upstream) by means of O-SIGNATURE message.

The VCU 130 next gathers N sequences of M successive slicer errors $\{E_1^m(k)\}_{1..M}$ to $\{E_N^m(k)\}_{1..M}$ as measured over the active lines $L_1$ to $L_N$ by the transceiver $110_1$ to $110_N$ (upstream) and $210_1$ to $210_N$ (downstream) during the transmission of M pilot digits over the joining line $L_{N+1}$.

These error samples are correlated with the pilot sequence $\{w_{N+1}^m(k)\}_{1..M}$ to obtain an estimate of the normalized crosstalk coefficients **b** (after some power normalization).

The VCU 130 now proceeds with the update of the precoding matrices as per equations (16) and (18), or as per equations (19) and (20), or as per equation (21) and (22), depending on the exact implementation choice.

At time t2, the first non-linear precoding stage 121 and the second linear precoding stages 122 are re-configured with second matrix values $\mathbf{M_1/N_1}$ and $\mathbf{Q_1/P_1}$ respectively. The crosstalk from the joining line $L_{N+1}$ is now properly canceled over the active lines $L_1$ to $L_N$, and the joining line $L_{N+1}$ is allowed to transition to the next initialization stage. The current scaling coefficients remains unchanged as $\mathbf{S_1} = \begin{bmatrix} 1 & 0 \\ 0 & \mathbf{S_0} \end{bmatrix}$, meaning the remote transceivers 210 are not re-configured with new direct gain values.

During O-P-VECTOR2, the VCU 130 gathers a sequence of M successive slicer errors $\{E_{N+1}^m(k)\}_{1..M}$ as measured over the joining line $L_{N+1}$ by the transceiver $110_{N+1}$ (upstream) and $210_{N+1}$ (downstream) during the transmission of M pilot digits over the active lines $L_1$ to $L_N$.

These error samples are correlated with the respective N pilot sequences $\{w_1^m(k)\}_{1..M}$ to $\{w_N^m(k)\}_{1..M}$ to obtain an estimate of the normalized crosstalk coefficients **c**.

The VCU 130 now proceeds with the **QR** matrix decomposition of the new estimate of the normalized channel matrix **G,** and updates the precoding matrices with third values $\mathbf{M_2/N_2}$ and $\mathbf{Q_2/P_2}$ at time $t_3$. A new scaling matrix is derived from the **QR** matrix decomposition, and the remote transceivers 210 are re-configured with new direct gain values $\mathbf{S_2}$.

The joining line $L_{N+1}$ is allowed to transition to CHANNEL ANALYSIS phase as the crosstalk present over the joining line $L_{N+1}$ is now properly canceled.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1. **A network unit** (100) comprising:

   - a **non-linear precoder** (120) configured to jointly pre-process transmit samples to be transmitted over respective subscriber lines for crosstalk mitigation, and whose operation is based upon **a first triangular precoding matrix (M; N)** and **a second precoding matrix (Q),**
   - **a vectoring controller** (130) configured to characterize **first channel couplings** between respective ones of a **set of active lines** $(L_1 .. L_N)$, to derive **first matrix values ($M_0$, $Q_0$; $N_0$, $Q_0$)** for the first and second precoding matrices based upon the first channel couplings, to detect **a joining event** whereby **a joining line** $(L_{N+1})$ is to be brought into service, to characterize **second channel couplings** from the joining line into the respective active lines, and to derive **second matrix values ($M_1$, $Q_1$; $N_1$, $Q_1$)** for the first and second precoding matrices,

   *wherein* the second matrix value of **a selected one of the first or second precoding matrix** is based upon the first and second channel couplings, while the second matrix value of the other precoding matrix is based upon the first channel couplings only, *and wherein* the second matrix values include the respective first matrix values as submatrices.

2. **A network unit** (100) according to claim 1, *wherein* the vectoring controller is further configured to characterize **third channel couplings** from the respective active lines into the joining line, and to derive **third matrix values** ($M_2$, $Q_2$; $N_2$, $Q_2$) for the first and second precoding matrices based upon the first, second and third channel couplings, and by means of a **QR** matrix decomposition.

3. **A network unit** (100) according to claim 1, *wherein* the second channel couplings are **characterized by** means of **a first sequence of pilot symbols** transmitted over the joining line during **a first identified stage** (O-P-VECTOR1) of the line initialization, and by means of **error measurements** carried out over the respective active lines while the first sequence of pilot symbols is being transmitted.

4. **A network unit** (100) according to claims 2 and 3, *wherein* the third channel couplings are **characterized by** means of **second sequences of pilot symbols** transmitted over the respective active lines, and by means of **error measurements** carried out over the joining line during **a second identified stage** (O-P-VECTOR1) of the line initialization while the second sequences of pilot symbols are being transmitted.

5. **A network unit** (100) according to claim 1, *wherein* the non-linear precoder comprises **a first partial precoding stage** (121) whose operation is based upon the first precoding matrix and including **a modulo function** $(\Gamma)$, and **a second partial precoding stage** (122) whose operation is based upon the second precoding matrix.

6. **A network unit** (100) according to claim 1, *wherein* the non-linear precoder comprises **a modulo shift unit** (121) whose operation is based upon the first precoding matrix and including **a modulo function** ($\gamma$), and **a full precoding stage** (122) whose operation is based upon the first and second precoding matrices.

7. **A network unit** (100) according to claim 1, *wherein* the selected precoding matrix is the first precoding matrix and the other precoding matrix is the second precoding matrix.

8. **A network unit** (100) according to claim 5 and 7, *wherein* the second matrix values of the first and second precoding matrices are respectively given by $\mathbf{M}_1 = \begin{bmatrix} 0 & 0 \\ -\mathbf{S}_0^{-1}\mathbf{b} & \mathbf{M}_0 \end{bmatrix}$ and

$$\mathbf{Q}_1 = \begin{bmatrix} 1 & 0 \\ 0 & \mathbf{Q}_0 \end{bmatrix},$$

$\mathbf{M}_0$ and $\mathbf{Q}_0$ denoting the first matrix values of the first and second precoding matrices respectively, **b** denoting the second channel couplings, and **So** denoting a first matrix value of **a scaling diagonal matrix** based upon the first channel couplings.

9. **A network unit** (100) according to claim 6 and 7, *wherein* the second matrix values of the first and second precoding matrices are respectively given by $\mathbf{N}_1 = \begin{bmatrix} 0 & 0 \\ -\mathbf{Q}_0^* \mathbf{G}_0^{-1}\mathbf{b} & \mathbf{N}_0 \end{bmatrix}$ and $\mathbf{Q}_1 = \begin{bmatrix} 1 & 0 \\ 0 & \mathbf{Q}_0 \end{bmatrix}$,

$\mathbf{N}_0$ and $\mathbf{Q}_0$ denoting the initial matrix value of the first and second precoding matrix respectively, and **Go** and **b** denoting the first and second channel couplings respectively.

10. **A network unit** (100) according to claim 1, *wherein* the selected precoding matrix is the second precoding matrix and the other precoding matrix is the first precoding matrix.

11. **A network unit** (100) according to claim 5 and 10, *wherein* the second matrix values of the first and second precoding matrices are respectively given by $\mathbf{M}_1 = \begin{bmatrix} 0 & 0 \\ 0 & \mathbf{M}_0 \end{bmatrix}$ and

$$\mathbf{Q}_1 = \begin{bmatrix} 1 & 0 \\ -\mathbf{G}_0^{-1}\mathbf{b} & \mathbf{Q}_0 \end{bmatrix},$$

$\mathbf{M}_0$ and $\mathbf{Q}_0$ denoting the initial matrix value of the first and second precoding matrix respectively, and **Go** and **b** denoting the first and second channel couplings respectively.

12. **A network unit** (100) according to any of claims 1 to 11, *wherein* the network unit is **an access node** (100) that supports wired communication with subscriber equipment over **an access plant.**

13. **A method** for controlling **a non-linear precoder** (120) configured to jointly pre-process transmit samples to be transmitted over respective subscriber lines for crosstalk mitigation, and whose operation is based upon **a first triangular precoding matrix (M; N)** and **a second precoding matrix (Q),** the method comprising:

   - characterizing **first channel couplings** between respective ones of **a set of active lines** ($L_1 .. L_N$),
   - deriving **first matrix values** ($\mathbf{M}_0$, $\mathbf{Q}_0$; $\mathbf{N}_0$, $\mathbf{Q}_0$) for the first and second precoding matrices based upon the first channel couplings,
   - detecting **a joining event** whereby **a joining line** ($L_{N+1}$) is to be brought into service,
   - characterizing **second channel couplings** from the joining line into the respective active lines, and
   - deriving **second matrix values** ($\mathbf{M}_1$, $\mathbf{Q}_1$; $\mathbf{N}_1$, $\mathbf{Q}_1$) for the first and second precoding matrices,

*wherein* the second matrix value of a selected one of the first or second precoding matrix is based upon the first and second channel couplings, while the second matrix value of the other precoding matrix is based upon the first channel couplings only, *and wherein* the second matrix values include the respective first matrix values as sub-matrices.

Fig. 1

Fig. 2

Fig. 3

Fig. 4

Europäisches
Patentamt

European
Patent Office

Office européen
des brevets

## EUROPEAN SEARCH REPORT

Application Number

EP 14 30 6406

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IKANOS COMMUNICATIONS: "G.fast: Comparison of Linear and Non-Linear Precoding for G.fast on 100 m BT Cable;TD2013-01-Q4-031", ITU-T DRAFT ; STUDY PERIOD 2013-2016, INTERNATIONAL TELECOMMUNICATION UNION, GENEVA ; CH, vol. 4/15, 23 January 2013 (2013-01-23), pages 1-10, XP017580319, [retrieved on 2013-01-23] * the whole document * | 1-13 | INV. H04B3/32 |
| A | GINIS G ET AL: "A multi-user precoding scheme achieving crosstalk cancellation with application to DSL systems", SIGNALS, SYSTEMS AND COMPUTERS, 2000. CONFERENCE RECORD OF THE THIRTY- FOURTH ASILOMAR CONFERENCE ON OCT. 29 - NOV. 1, 2000, PISCATAWAY, NJ, USA,IEEE, 29 October 2000 (2000-10-29), page 1627, XP032142514, DOI: 10.1109/ACSSC.2000.911265 ISBN: 978-0-7803-6514-8 * the whole document * | 1-13 | |
| A | US 2007/081582 A1 (GINIS GEORGIOS [US] ET AL) 12 April 2007 (2007-04-12) * paragraphs [0123] - [0125], [0130] * | 1-13 | TECHNICAL FIELDS SEARCHED (IPC) H04B H04L |
| A | US 2009/271550 A1 (CLAUSEN AXEL [DE] ET AL) 29 October 2009 (2009-10-29) * figures 1-3 * | 1-13 | |

The present search report has been drawn up for all claims

| Place of search | Date of completion of the search | Examiner |
|---|---|---|
| Munich | 11 February 2015 | Murcia Martinez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 30 6406

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2015

| Patent document cited in search report | | | Publication date | Patent family member(s) | | | Publication date |
|---|---|---|---|---|---|---|---|
| US 2007081582 | A1 | | 12-04-2007 | CN | 1535513 | A | 06-10-2004 |
| | | | | CN | 101005323 | A | 25-07-2007 |
| | | | | EP | 1396101 | A1 | 10-03-2004 |
| | | | | EP | 2259456 | A1 | 08-12-2010 |
| | | | | EP | 2533436 | A1 | 12-12-2012 |
| | | | | JP | 4370418 | B2 | 25-11-2009 |
| | | | | JP | 2004537197 | A | 09-12-2004 |
| | | | | JP | 2009189049 | A | 20-08-2009 |
| | | | | JP | 2013229892 | A | 07-11-2013 |
| | | | | KR | 20040014542 | A | 14-02-2004 |
| | | | | US | 2003086514 | A1 | 08-05-2003 |
| | | | | US | 2007081582 | A1 | 12-04-2007 |
| | | | | US | 2012063531 | A1 | 15-03-2012 |
| | | | | US | 2012257691 | A1 | 11-10-2012 |
| | | | | US | 2014254704 | A1 | 11-09-2014 |
| | | | | WO | 02100008 | A1 | 12-12-2002 |
| US 2009271550 | A1 | | 29-10-2009 | DE | 102009018705 | A1 | 29-10-2009 |
| | | | | US | 2009271550 | A1 | 29-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13305569 A, Alcatel-Lucent

**Non-patent literature cited in the description**

- **ALCATEL-LUCENT.** G. fast: Precoder Gain scaling. *ITU-T SG15 Q4a 2013-03-Q4-053,* March 2013
- **M. TOMLINSON.** New Automatic Equalizer Employing Modulo Arithmetic. *Electronics Letters,* March 1971, vol. 7 (5-6), 138-139
- **H. HARASHIMA ; H. MIYAKAWA.** Matched-Transmission Technique for channels with Inter symbol Interference. *IEEE Trans. on Communications,* August 1972, vol. 20 (4), 774-780
- **G. GINIS ; J.M. CIOFFI.** A Multi-user Precoding Scheme Achieving Crosstalk Cancellation with Application to DSL systems. *Proc. 34th Asilomar Conference on Signals, Systems and Computers,* 2000
- **S. SINGH ; M. SORBARA.** G.fast: Comparison of Linear and Non-Linear Precoding for G.fast on 100m BT Cable. *ITU-T SG15 Q4a contribution 2013-01-Q4-031,* January 2013